# EUROPÄISCHE PATENTSCHRIFT

(11) **EP 0 480 200 B1**
(45) Veröffentlichungstag und Bekanntmachung des Hinweises auf die Patenterteilung: **14.12.1994**
(21) Anmeldenummer: 91115585.1
(22) Anmeldetag: 13.09.1991
(51) Int. Cl.: C09J 171/10

(54) **Schmelzklebstoff auf Basis von Polyarylenetherketonen und seine Verwendung**
Hot melt adhesive based on polyarylenetherketones and its application
Colle thermofusible à base de polyéthercétones aromatiques et son application

(30) Priorität: 13.09.1990 DE 4029069
(43) Veröffentlichungstag der Anmeldung: 15.04.1992
(73) Patentinhaber: HOECHST AKTIENGESELLSCHAFT, 65926 Frankfurt am Main (DE)
(72) Erfinder: Lücke, Andreas, Dr., W-6251 Waldbrunn (DE)

(56) Entgegenhaltungen:
- PATENT ABSTRACTS OF JAPAN, vol. 12, no. 421 (C-541), 8. November 1988; & JP-A-63 152 627
- PATENT ABSTRACTS OF JAPAN, vol. 8, no. 251 (C-252), 16. November 1984; & JP-A-59 130 574
- DATABASE WPIL, no. 82-36609(e), Derwent Publications Limited, London, GB

## Beschreibung

Die Erfindung betrifft Schmelzklebstoffe auf Basis von Polyarylenetherketonen (PAEK), deren Ether/Keton-Verhältnis kleiner 2 ist und ihre Verwendung zur Verbindung von Metall-, Kunststoff-, Glas- und Keramik-Teilen.

Schmelzklebstoffe sind Kleber, die aufgeschmolzen werden, und die durch Abkühlen auf physikalischem Wege abbinden. Der Abkühlvorgang verläuft sehr schnell, so daß die Verbindung bereits nach kurzer Zeit belastbar ist.

Auf die Möglichkeit der Herstellung einer Heißschmelz-Klebeverbindung von Metallen unter Verwendung eines Polyarylenetherketons der Struktur PEEK (Polyetheretherketon), das ein Ether/Ketonverhältnis von 2:1 in der Sequenz der Polymerkette aufweist, ist in der Literatur bereits hingewiesen worden (Derwent Report 36609E/18). Jedoch sind die erhaltenen Klebverbindungen bezüglich der Temperaturbeständigkeit nicht voll befriedigend.

Die Verwendung von schwefelhaltigen Polyarylenetherketonen als Schmelzklebstoff ist ebenfalls bekannt (US 4,616,056). Der Schwefel ist in diesen Mischungen innig vermischt mit dem Polyarylenetherketon und liegt in Form von elementarem Schwefel, anorganischen Sulfiden oder organischen Schwefelverbindungen vor. Durch die Nachhärtung bei hoher Temperatur findet eine Vernetzung statt, durch die die erhöhten Eigenschaftswerte erhalten werden. Polyarylenetherketone ohne Schwefelzusatz werden in diesem Stand der Technik für den Einsatz als Schmelzkleber als nicht geeignet bezeichnet. Bei der vom Schwefel herbeigeführten Vernetzung ist mit einer Versprödung des Klebstoffes zu rechnen, und damit mit einer nachteiligen geringeren Ermüdungsfestigkeit.

Die gute Haftung von Copolyketonen mit der Struktur PEKK auf Metall ist bekannt (US-A 3,516,966). Jedoch bereiten Polyketone auf dieser Basis Schwierigkeiten hinsichtlich thermischer Zersetzung bei den Verarbeitungstemperaturen, so daß eine Verwendung als Schmelzkleber ausscheidet.

Es war daher erwünscht, einen unvernetzten Schmelzklebstoff zur Verfügung zu haben, der hochtemperaturbeständige Klebverbindungen ermöglicht, die bis zu 200 °C stabil sind, und der aufgrund seiner Festigkeit bei hohen Temperaturen z.B. im Kraftfahrzeugmotorbereich und im Flugzeugbau eingesetzt werden kann.

Diese Aufgabe wurde gelöst durch den Einsatz von bestimmten Polyarylenetherketonen mit einem niedrigeren Verhältnis von Ether zu Ketoneinheiten als 2:1, z.B. PEK, PEEKK und PEKEKK. Die Erfindung bezieht sich daher auf einen Schmelzklebstoff auf Basis eines Polyarylenetherketons der allgemeinen Formel

-[-O-Ar(-L-Ar)ₓ-O-Ar-CO-(-Ar-M)_{y}-Ar-]- (I)

in der Ar eine aromatische Gruppe ist und jeweils unabhängig voneinander eine Phenylen-, Diphenyl- oder Naphthylengruppe ist, L oder M jeweils -O- oder -CO- ist, x und y unabhängig voneinander Null oder 1, 2, 3 oder 4 sind, das Ether/Keton-Verhältnis zwischen den Werten 0,5 und 2 liegt und vorzugsweise 0,66 bis 1 beträgt, die Schmelzfließfähigkeit (MVI 400/10 min) 2 bis 250 beträgt und das Polyetherketon die Struktur PEK, PEEKK und PEKEKK hat.

Die geeigneten Polyarylenetherketone weisen vorzugsweise Volumenschmelzindices MVI (400/10 min) von 2 bis 100 auf.

Mit PEK, PEEKK und PEKEKK als bevorzugte Schmelzklebstoffe hergestellte Klebverbindungen sind nicht nur temperaturbeständiger, sondern weisen auch höhere Zugscherfestigkeitswerte auf als das Polyarylenetherketon mit den sich wiederholenden Einheiten der Formel PEEK. Sie übertreffen auch bei weitem handelsübliche, auf anderer Basis aufgebaute Klebstoffe und Schmelzklebstoffe. Besonders bevorzugt sind die Polyarylenetherketone der Struktur PEEKK und PEKEKK.

Polyarylenetherketone sind teilkristalline Thermoplaste mit hervorragender Temperaturbeständigkeit. Polymere dieses Typs haben Glasübergangstemperaturen über 130°C und Schmelzpunkte zwischen 330 und 400°C. Die geeigneten Polyarylenetherketone gemäß der Erfindung besitzen im allgemeinen Glasübergangstemperaturen von über 150°C, vorzugsweise über 155°C. Ihre hohen thermischen Übergangstemperaturen sind der Grund für die hohen Wärmeformbeständigkeiten dieser Werkstoffe. Aufgrund ihres chemischen und morphologischen Aufbaus besitzen Polyarylenetherketone gegenüber anderen Hochtemperatur-Polymeren wesentliche Vorteile. So haben sie gegenüber Polyimiden, die noch höhere Wärmeformbeständigkeiten erreichen können, den für den Verarbeiter entscheidenen Vorteil, daß sie schmelzformbar sind.

Gegenüber den amorphen Hochtemperatur-Polymeren, wie Polyethersulfonen oder Polyetherimiden haben die teilkristallinen Polyarylenetherketone den Vorteil der höheren mechanischen Festigkeit, der ausgeprägten Lösungsmittelrißbeständigkeit und einer sehr guten Chemikalienresistenz. Die Kombination dieser Eigenschaften ermöglicht den Einsatz von Polyarylenetherketonen im Motor- und Maschinenbau.

Bei der Wärmeformbeständigkeit der Polymere der Gruppe der Polyarylenetherketone spielt das Ether/Keton Verhältnis eine entscheidende Rolle. Klebverbindungen, die mit PEK, PEEKK und PEKEKK als Schmelzkleber hergestellt werden, haben eine etwa 20 Grad höhere Temperaturbelastbarkeit als solche, die mit PEEK hergestellt worden sind. In Tabelle 2 sind die Werte der die Wärmeformbeständigkeiten bestimmenden Glasübergangstemperaturen im Vergleich aufgeführt.

Für die Herstellung von temperaturbeständigen Klebverbindungen sind daher die Polyarylenetherketone mit einem Ether/Keton Verhältnis von kleiner 2 geeignet. Deutlich wird dies beim Vergleich PEEK zu PEEKK: gegenüber dem - dem Stand der Technik entsprechenden - PEEK hat das PEEKK den Vorteil der um ca. 20 K erhöhten Wärmeformbeständigkeit.

Die Polyarylenetherketone können nicht nur für sich allein, sondern auch als Mischungen eingesetzt werden. Geeignet sind auch Copolyetherketone, die aus zwei oder mehreren, sich wiederholenden Einheiten EK, EEKK, EKEKK und EKK bestehen, wobei beliebige Kombinationen möglich sind.

Auch Polyarylenetherketone, bei denen nicht mehr als 5 Mol% der Ethergruppen durch Thioethergruppen ersetzt sind, und die somit keiner Vernetzung unterliegen, sind als Schmelzklebstoff gemäß der Erfindung geeignet.

Der Schmelzklebstoff kann in Form von Pulver, Granulat, Folien und Fasern zum Einsatz kommen. Die Korngröße des Schmelzklebstoffes hat einen geringen Einfluß auf die Festigkeit der Verbindung, bevorzugt wird ein Pulver mit einer mittleren Korngröße von 20 µm (d₅₀-Wert).

Der Schmelzklebstoff kann übliche Füll- und/oder Verstärkungsstoffe in solchen Mengen enthalten, die die Hafteigenschaften nicht beeinträchtigen.

Die Herstellung eines erfindungsgemäß zu verwendenden Polyarylenetherketons z.B. PEEKK kann in bekannter Weise z.B. nach der EP-B 0 143 407 durch nukleophile Kondensation aus Hydrochinon und 1,4-Bis(4'-chlorbenzoyl)-benzol oder 1,4-Bis(4'-fluorbenzoyl)-benzol erfolgen. Das Polyarylenetherketon hat eine inhärente Viskosität von mindestens 0,5, bevorzugt 0,7 bis 1,5 und insbesondere 0,8 bis 1,2.

Eine weitere Möglichkeit zur Herstellung von Polyarylenetherketonen der Formel (I) besteht in der Friedel-Crafts-Reaktion von Diacylhalogeniden mit aromatischen Verbindungen mit mindestens zwei Wasserstoffatomen in Gegenwart eines Katalysators. (DE-OS 16 45 153, US-PS 3,953,400 und US-PS 3,956,240). Typische Ausgangsmaterialien für die Herstellung der Polyarylenetherketone mittels Friedel-Crafts-Acylierung sind Terephthaloylchlorid oder Phosgen und Diphenylether, gegebenenfalls Diphenoxybiphenyl, Diphenoxybenzol oder p-Phenoxy-benzoylchlorid.

Der Schmelzklebstoff gemäß der Erfindung kann zur Herstellung von Verbundteilen aus metallischen, keramischen und polymeren Werkstoffen wie Stahl, Aluminium, Kupfer, Keramik, Glas und/oder Kunststoff eingesetzt werden. Bevorzugt ist der Verbund von Blechen aus Stahl sowie Stahl/Keramik.

### Beispiele

1) 7,708 kg Hydrochinon, 15,3 kg Natriumhydrogencarbonat und 70 kg Diphenylsulfon wurden in einen Rührkessel gegeben. Die Luft wurde durch Stickstoff verdrängt und die Mischung auf 140 °C erhitzt. Anschließend wurde bei 140 - 150 °C gerührt und nach dem Nachlassen der Gasentwicklung auf 210 °C erhitzt. 22,45 kg 1,4-Bis(4'-fluorbenzoyl)-benzol (BFB) wurden zugefügt. Innerhalb einer Stunde wurde die Temperatur auf 310 °C erhöht. Nach weiteren 20 Minuten wurde die Reaktionsmischung abgekühlt, zerkleinert und zur Entfernung von Salzen und Diphenylsulfon wechselweise mit Wasser und Schwefelsäure und mit Aceton gewaschen. Das Polymerpulver wurde bei 120 °C/100 mbar getrocknet. Die mittlere Korngröße des anfallenden Pulvers betrug 700 µm, die inhärende Viskosität (IV) des Polymerpulvers, gemessen nach DIN 53 735 bei 25 °C in conc. Schwefelsäure, 1,1 und der MVI (400/10 min) = 15.
2) Die bei den Klebversuchen eingesetzten Streifen aus Stahlblech (®V2A), PEEKK, Aluminium und Kupfer hatten jeweils die Dimensionen Länge 100 mm, Breite 25 mm und Höhe 1,5 mm.
Ein Klebversuch - jeweils an 5 Proben - wurde mit Streifen aus Stahlblech (V2A) durchgeführt, deren Fügeflächen durch Schleifen mit Körnung 80 aufgerauht waren. Beide Fügeteile wurden auf einem Heizelement erwärmt.
Die Temperatur des Heizelements wurde über einen Regler eingestellt. Zur Herstellung der Klebung mit dem PEEKK-Pulver wurde aus Gründen des schnelleren Aufschmelzens eine Klebetemperatur von Tₖ = 450 °C gewählt. Nach Erreichen dieser Temperatur wurde das PEEKK-Pulver aus Beispiel 1 auf eine Fügefläche gestreut und plastifiziert. Das zweite Stahlblech wurde mit einer Überlappungslänge (l_{ü}) von 10 mm darauf fixiert und belastet. Dabei wurde zunächst das obere Fügeteil gegen das untere bewegt, um eine optimale Benetzung zu erhalten. Anschließend wurde der Prüfling dem Heizelement entnommen und unter konstanter Belastung bis zur Erstarrung der Schmelze abgekühlt. Der Zugversuch wurde, entsprechend DIN 53 283, zwei Stunden nach Klebebeginn durchgeführt. Die Zugscherfestigkeit betrug 26,96 N/mm².
3a) Beispiel 2 wurde wiederholt mit einem PEEKK-Pulver mit einem MVI von 27, dessen Teilchen auf eine mittleren Korngröße von 20 µm aufgemahlen wurden. Die Zugscherfestigkeit betrug 35,81 N/mm².
3b) In Abänderung des Beispiels 3a wurden beide Stahl-Plättchen aufgeheizt, jeweils mit Pulver der mittleren Korngröße von 20 µm bestreut und die Plättchen nach Plastifizierung des Schmelzklebstoffs zusammengefügt. Die Zugscherfestigkeit betrug 40,2 N/mm² (Mittelwert von 3 Versuchen).
4) Die Fügeteilpaarung war Stahl/Stahl wie in Beispiel 2, aber es wurde aus dem in Beispiel 1 anfallenden PEEKK-Pulver ein Granulat hergestellt und dieses als Schmelzklebstoff eingesetzt, mittlere Korngröße 3000 µm. Die Zugscherfestigkeit betrug 30,28 N/mm².
5) Beispiel 2 wurde wiederholt mit einem PEEKK-Pulver mit einem MVI von 6, aufgemahlen auf eine mittleren Korngröße von 60 µm. Die Zugscherfestigkeit betrug 32,96 N/mm².
6) Aus dar Tabelle 1 ist der Einfluß der Korngröße und der Schmelzfließfähigkeit unter Verwendung von PEEKK als Schmelzklebstoff bei der Fügeteilpaarung Stahl/Stahl zu erkennen.

**Tabelle 1**

| Schmelzklebstoff | Korngröße | MVI | Zugscherfestigkeit |
|---|---|---|---|
| PEEKK-Pulver | 20 µm | 27 | 35,81 N/mm² |
| PEEKK-Pulver | 60 µm | 26 | 30,65 N/mm² |
| PEEKK-Pulver | 60 µm | 6 | 32,96 N/mm² |
| PEEKK-Granulat | 3000 µm | 15 | 30,28 N/mm² |

Die Werte sind Mittelwerte von jeweils 5 Messungen. Aus den Ergebnissen folgt, daß bei der Fügeteilpaarung Stahl/Stahl das Pulver mit der feineren Korngröße höhere Scherfestigkeiten bewirken kann. Der Vergleich der Schmelzklebstoffe mit gleicher Korngröße, aber unterschiedlicher Fließfähigkeit des Schmelzklebstoffes zeigt keinen eindeutigen Einfluß auf die Zugscherfestigkeit.
7) In Tabelle 2 werden die Zugscherfestigkeiten von Klebverbindungen von Polyarylenetherketonen mit einem E/K-Verhältnis von kleiner 2 mit PEEKK verglichen. Die Klebeversuche wurden analog Beispiel 2 durchgeführt, Klebetemperatur (Tₖ) jeweils 380 °C (überlappt geklebte Verbindungen von Stahl-Streifeproben. Überlappungslänge l_{ü} = 10 mm, gemessen bei 23 °C nach DIN 53 283). Die angegebenen Zugscherfestigkeitswerte sind Mittelwerte aus jeweils 5 Versuchen.

**Tabelle 2**

| Vergleich der Zugscherfestigkeiten verschiedener Klebstoffe: | | | |
|---|---|---|---|
| Schmelzklebstoff [PAEK-Sequenz] | Schmelzpunkt [°C] ** | Glastemperatur**[Tg] | Zugscherfestigkeit [N/mm²] |
| PEK *) | 373 | 162 | 26,80 |
| PEEKK aus Beispiel 4 | 365 | 160 | 30,28 |
| PEKEKK *) | 381 | - | 34,07 |
| PEEK *)(Vergleich) | 334 | 143 | 20,03 |

| | | | |
|---|---|---|---|
| *) Die Proben stellen handelsübliche Produkte dar und wurden in der Lieferform eingesetzt. | | | |
| **) Literaturangaben der Hersteller | | | |

Aus den Resultaten geht hervor, daß Schmelzklebstoffe auf Basis PEEKK, PEK und PEKEKK festere Klebverbindungen bewirken als ein Schmelzklebstoff auf Basis PEEK und auch bei höheren Temperaturen noch feste Verbindungen ergeben.
8) Ein Stahlplättchen (V2A) und ein Kunststoffplättchen aus PEEKK, das mit 30 % Glasfasern verstärkt ist, wurden mit PEEKK-Granulatkörnern der mittleren Korngröße 3000 µm verklebt. Der Mittelwert der Zugscherfestigkeit betrug 16,16 N/mm².
9) Zwei Aluminiumplättchen (sog. AlMg 3 - Legierung) wurden nach der in Beispiel 2 beschriebenen Methode mit dem PEEKK-Pulver der mittleren Korngröße 700 µm verklebt. Der Mittelwert der Zugscherfestigkeit betrug 11,76 N/mm².
10) Beispiel 9 wurde wiederholt mit dem Unterschied, daß das feingemahlene Pulver der mittleren Korngröße 20 µm aus Beispiel 3 verwendet wurde. Die Zugscherfestigkeit betrug 25,31 N/mm².
11) Beispiel 9 wurde wiederholt mit dem in Beispiel 1 anfallenden Pulver, aus dem zunächst ein Granulat hergestellt und dieses anschließend zu einer Folie extrudiert wurde. Ein Stück Folie der Stärke 250 µm diente als Schmelzklebstoff. Die Zugscherfestigkeit betrug 16,31 N/mm².
12) Ein Aluminiumplättchen (sog. AlMg 3-Legierung) und ein Kunststoffplättchen aus glasfaserverstärktem PEEKK wie in Beispiel 6, wurden mit dem PEEKK-Pulver der mittleren Korngröße 700 µm verklebt. Der Mittelwert der Zugscherfestigkeit betrug 12,32 N/mm².
13) Beispiel 12 wurde wiederholt mit dem PEEK-Granulat der mittleren Korngröße 3000 µm. Die Zugscherfestigkeit betrug 12,06 N/mm².
14) Zwei Kupferplättchen wurden nach der in Beispiel 2 beschriebenen Methode mit dem PEEKK-Pulver der mittleren Korngröße 700 µm verklebt. Der Mittelwert der Zugscherfestigkeit betrug 7,64 N/mm².
15) Beispiel 14 wurde wiederholt, aber es wurde das feingemahlene Pulver der mittleren Korngröße 20 µm gemäß Beispiel 3 als Schmelzklebstoff verwendet. Die Zugscherfestigkeit betrug 15,63 N/mm².
16) Beispiel 14 wurde wiederholt mit dem Granulat der mittleren Korngröße 3000 µm aus Beispiel 4. Die Zugscherfestigkeit betrug 12,29 N/mm².
17) Beispiel 14 wurde wiederholt, jedoch unter Verwendung der Folie aus Beispiel 11 als Schmelzklebstoff. Die Zugscherfestigkeit betrug 14,34 N/mm².
18) Ein Kupferplättchen und ein Kunststoffplättchen aus glasfaserverstärktem PEEKK, wie in Beispiel 8, wurden mit dem in Beispiel 1 anfallenden PEEKK-Pulver der mittleren Korngröße 700 µm verklebt. Der Mittelwert der Zugscherfestigkeit betrug 10,74 N/mm².
19) Ein Stahlblech (V2A) und ein Keramik-Klötzchen der Dimension 20x20x4,5 mm (Keramik HIP RBSN der Fa. Hoechst-CeramTec, Selb, Bundesrepublik Deutschland) wurden mit dem PEEKK-Pulver der mittleren Korngröße 20 µm aus Beispiel 3 miteinander verklebt. Dazu wurden beide Fügeteile auf ca. 440 °C erwärmt. Anschließend wurde das PEEKK-Pulver auf beide Fügeflächen aufgebracht und plastifiziert. Bei gleichmäßiger Benetzung der Oberflächen wurden die Fügeteile aufeinander gelegt und mit einer Überlappungslänge von 16 mm verklebt. Die Zugscherfestigkeiten betrugen 43,7 und 48,9 N/m² (Einzelwerte von 2 Messungen). Beide Versuche zeigten Adhäsionsbrüche auf der Keramikseite.
20) Eine Aluminium-Streifenprobe wurde mit einem Keramik-Klötzchen (HIP RBSN), wie in Beispiel 19 beschrieben, verklebt. Die Einzelwerte der Zugscherfestigkeiten von drei Versuchen betrugen 23,9; 19,6 und 24,9 N/mm². Hierbei blieb die Verklebung intakt, jedoch riß der Aluminiumstreifen am Überlappungsanfang ab.

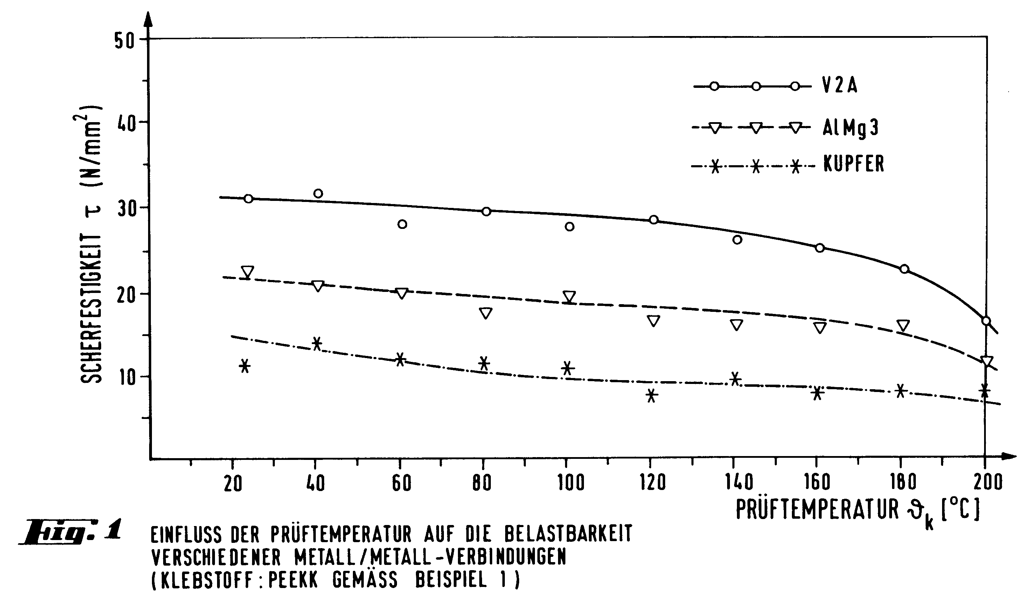

21) Figur 1 zeigt die Temperaturabhängigkeit der Zugscherfestigkeiten von mit PEEKK als Schmelzklebstoff geklebten Fügestreifen aus V2A, Aluminiumlegierung und Kupfer.

Die Prüflinge hatten die in Beispiel 2 angegebenen Dimensionen, und wurden bei unterschiedlichen Temperaturen ausgeprüft. Es zeigt sich, daß die Scherfestigkeiten bei den einzelnen Metall/Metall-Verbindungen bis 200 °C nahezu konstant bleiben.

## Patentansprüche (Patentansprüche für folgende(n) Vertragsstaat(en): DE, FR, GB, IT)

1. Schmelzklebstoff auf Basis eines Polyarylenetherketons der Formel
-[-O-Ar(-L-Ar)ₓ-O-Ar-CO-(-Ar-M)_{y}-Ar-]- (I)
in der Ar eine aromatische Gruppe ist, und jeweils unabhängig voneinander eine Phenylen-, Diphenyl- oder Naphthylengruppe ist, L oder M jeweils -O- oder -CO- ist, x und y unabhängig voneinander Null oder 1, 2, 3 oder 4 sind, das Ether/Keton-Verhältnis zwischen den Werten 0,5 und2 liegt, die Schmelzfließfähigkeit (MVI 400/10 min) 2 bis 250 beträgt und das Polyarylenetherketon die Struktur PEK, PEEKK und PEKEKK hat.

2. Schmelzklebstoff nach Anspruch 1, dadurch gekennzeichnet, daß die Fließfähigkeit MVI 2 bis 100 beträgt.

3. Schmelzklebstoff nach Anspruch 1 oder 2, dadurch gekennzeichnet, daß das Ether/Keton-Verhältnis 0,66 bis 1 beträgt.

4. Schmelzklebstoff nach einem oder mehreren der Ansprüche 1 bis 3, bei dem das Polyarylenetherketon ein Copolyetherketon ist, daß aus zwei oder mehreren, sich wiederholenden Einheiten EK, EEKK, EKEKK und EKK besteht.

5. Schmelzklebstoff nach einem oder mehreren der Ansprüche 1 bis 4, dadurch gekennzeichnet, daß Mischungen der Polyarylenetherketone vorliegen.

6. Schmelzklebstoff nach einem oder mehreren der Ansprüche 1 bis 5, dadurch gekennzeichnet, daß bis zu 5 Mol-% der Ethergruppen durch Thioethergruppen ersetzt sind.

7. Schmelzklebstoff nach einem oder mehreren der Ansprüche 1 bis 6, dadurch gekennzeichnet, daß der Schmelzklebstoff Füll- und/oder Verstärkungsstoffe enthält.

8. Schmelzklebstoff nach einem oder mehreren der Ansprüche 1 bis 7, dadurch gekennzeichnet, daß er in Form von Pulver, Granulat, Folien und Fasern vorliegt.

9. Verwendung eines Schmelzklebstoffes nach einem oder mehreren der Ansprüche 1 bis 8, zur Herstellung von Verbundteilen aus metallischen, keramischen und polymeren Substraten.

10. Verwendung nach Anspruch 9, dadurch gekennzeichnet, daß die Substrate aus Stahl, Aluminium, Kupfer, Keramik, Glas und/oder Kunststoff bestehen.

11. Verwendung nach Anspruch 9 oder 10, dadurch gekennzeichnet, daß die Verbundteile aus Stahl oder Stahl/Keramik bestehen.

## Patentansprüche (Patentansprüche für folgende(n) Vertragsstaat(en): ES)

1. Verfahren zur Herstellung eines Schmelzklebstoffes, dadurch gekennzeichnet, daß ein Polyarylenetherketon der Formel
-[-O-Ar(-L-Ar)ₓ-O-Ar-CO-(-Ar-M)_{y}-Ar-]- (I)
eingesetzt wird,
in der Ar eine aromatische Gruppe ist, und jeweils unabhängig voneinander eine Phenylen-, Diphenyl- oder Naphthylengruppe ist, L oder M jeweils -O- oder -CO- ist, x und y unabhängig voneinander Null oder 1, 2, 3 oder 4 sind, das Ether/Keton-Verhältnis zwischen den Werten 0,5 und2 liegt, die Schmelzfließfähigkeit (MVI 400/10 min) 2 bis 250 beträgt und das Polyarylenetherketon die Struktur PEK, PEEKK und PEKEKK hat.

2. Verfahren nach Anspruch 1, dadurch gekennzeichnet, daß die Fließfähigkeit MVI 2 bis 100 beträgt.

3. Verfahren nach Anspruch 1 oder 2, dadurch gekennzeichnet, daß das Ether/Keton-Verhältnis 0,66 bis 1 beträgt.

4. Verfahren nach einem oder mehreren der Ansprüche 1 bis 3, bei dem das Polyarylenetherketon ein Copolyetherketon ist, daß aus zwei oder mehreren, sich wiederholenden Einheiten EK, EEKK, EKEKK und EKK besteht.

5. Verfahren nach einem oder mehreren der Ansprüche 1 bis 4, dadurch gekennzeichnet, daß Mischungen der Polyarylenetherketone vorliegen.

6. Verfahren nach einem oder mehreren der Ansprüche 1 bis 5, dadurch gekennzeichnet, daß bis zu 5 Mol-% der Ethergruppen durch Thioethergruppen ersetzt sind.

7. Verfahren nach einem oder mehreren der Ansprüche 1 bis 6, dadurch gekennzeichnet, daß der Schmelzklebstoff Füll- und/oder Verstärkungsstoffe enthält.

8. Verfahren nach einem oder mehreren der Ansprüche 1 bis 7, dadurch gekennzeichnet, daß der Schmelzklebstoff in Form von Pulver, Granulat, Folien und Fasern vorliegt.

9. Verwendung eines Schmelzklebstoffes nach einem oder mehreren der Ansprüche 1 bis 8, zur Herstellung von Verbundteilen aus metallischen, keramischen und polymeren Substraten.

10. Verwendung nach Anspruch 9, dadurch gekennzeichnet, daß die Substrate aus Stahl, Aluminium, Kupfer, Keramik, Glas und/oder Kunststoff bestehen.

11. Verwendung nach Anspruch 9 oder 10, dadurch gekennzeichnet, daß die Verbundteile aus Stahl oder Stahl/Keramik bestehen.

## Claims (Claims for the following Contracting State(s): DE, FR, GB, IT)

1. A hot melt adhesive based on a polyarylene ether ketone of the formula
-[-O-Ar(-L-Ar)ₓ-O-Ar-CO-(-Ar-M)_{y}-Ar-]- (I)
in which Ar is an aromatic group and, in each case independently of one another, is a phenylene, diphenyl or naphthylene group, L or M is in each case -O- or -CO- and x and y independently of one another are zero or 1, 2, 3 or 4, the ether/ketone ratio is between the values 0.5 and 2, the melt flowability (MVI 400/10 min) is 2 to 250 and the polyarylene ether ketone has the PEK, PEEKK or PEKEKK structure.

2. A hot melt adhesive as claimed in claim 1, wherein the flowability MVI is 2 to 100.

3. A hot melt adhesive as claimed in claim 1 or 2, wherein the ether/ketone ratio is 0.66 to 1.

4. A hot melt adhesive as claimed in one or more of claims 1 to 3, wherein the polyarylene ether ketone is a copolyether ketone which is composed of two or more recurring EK, EEKK, EKEKK and EKK units.

5. A hot melt adhesive as claimed in one or more of claims 1 to 4, wherein mixtures of the polyarylene ether ketones are present.

6. A hot melt adhesive as claimed in one or more of claims 1 to 5, wherein up to 5 mol% of the ether groups have been replaced by thioether groups.

7. A hot melt adhesive as claimed in one or more of claims 1 to 6, wherein the hot melt adhesive contains fillers and/or reinforcing materials.

8. A hot melt adhesive as claimed in one or more of claims 1 to 7, which is in the form of powder, granules, films and fibers.

9. The use of a hot melt adhesive as claimed in one or more of claims 1 to 8 for the production of composites from metallic, ceramic and polymer substrates.

10. The use as claimed in claim 9, wherein the substrates are composed of steel, aluminum, copper, ceramic, glass and/or plastic.

11. The use as claimed in claim 9 or 10, wherein the composites are composed of steel or steel/ceramic.

## Claims (Claims for the following Contracting State(s): ES)

1. A process for producing a hot melt adhesive, which comprises employing a polyarylene ether ketone of the formula
-[-O-Ar(-L-Ar)ₓ-O-Ar-CO-(-Ar-M)_{y}-Ar-]- (I)
in which Ar is an aromatic group and, in each case independently of one another, is a phenylene, diphenyl or naphthylene group, L or M is in each case -O- or -CO- and x and y independently of one another are zero or 1, 2, 3 or 4, the ether/ketone ratio is between the values 0.5 and 2, the melt flowability (MVI 400/10 min) is 2 to 250 and the polyarylene ether ketone has the PEK, PEEKK or PEKEKK structure.

2. The process as claimed in claim 1, wherein the flowability MVI is 2 to 100.

3. The process as claimed in claim 1 or 2, wherein the ether/ketone ratio is 0.66 to 1.

4. The process as claimed in one or more of claims 1 to 3, wherein the polyarylene ether ketone is a copolyether ketone which is composed of two or more recurring EK, EEKK, EKEKK and EKK units.

5. The process as claimed in one or more of claims 1 to 4, wherein mixtures of the polyarylene ether ketones are present.

6. A hot melt adhesive as claimed in one or more of claims 1 to 5, wherein up to 5 mol% of the ether groups have been replaced by thioether groups.

7. The process as claimed in one or more of claims 1 to 7, wherein the hot melt adhesive contains fillers and/or reinforcing materials.

8. The process as claimed in one or more of claims 1 to 7, wherein the hot melt adhesive is in the form of powder, granules, films and fibers.

9. The use of a hot melt adhesive as claimed in one or more of claims 1 to 9 for the production of composites from metallic, ceramic and polymer substrates,

10. The use as claimed in claim 9, wherein the substrates are composed of steel, aluminium, copper, ceramic, glass and/or plastic.

11. The use as claimed in 9 or 10, wherein the composites are composed of steel or steel/ceramic.

## Revendications (Revendications pour l'(les) Etat(s) contractant(s) suivant(s): DE, FR, GB, IT)

1. Colle thermofusible à base d'une polyarylène-éther-cétone de formule
-[-O-Ar(-L-Ar)ₓ-O-Ar-CO-(-Ar-M)_{y}-Ar-]- (I)
dans laquelle Ar désigne un groupe aromatique, indépendamment les uns des autres, un groupe phénylène, diphényle ou naphtylène, L et M désignent chacun -O- ou -CO- et x et y, indépendamment l'un de l'autre, le nombre 0, 1, 2, 3 ou 4, dont le rapport éther/cétone est compris entre 0,5 et 2, la fluidité à l'état fondu (MVI 400/10 min) est de 2 à 250 et la polyarylène-éthercétone a la structure PEC, PEECC et PECECC.

2. Colle thermofusible selon la revendication 1, caractérisée en ce que sa fluidité MVI est de 2 à 100.

3. Celle thermofusible selon la revendication 1 ou 2, caractérisée en ce que le rapport éther/cétone est compris entre 0,66 et 1.

4. Colle thermofusible selon une ou plusieurs des revendications 1 à 3, caractérisée en ce que la polyarylène-éther-cétone est une copolyéthercétone formée de deux motifs récurrents ou plus EC, EECC, ECECC et ECC.

5. Colle thermofusible selon une ou plusieurs des revendications 1 à 4, caractérisée en ce qu'il s'agit de mélanges de diverses polyarylène-éthercétones.

6. Colle thermofusible selon une ou plusieurs des revendications 1 à 5, caractérisée en ce jusqu'à 5 Mol% des groupes éthers sont remplacés par des groupes thioéthers.

7. Colle thermofusible selon une ou plusieurs des revendications 1 à 6, caractérisée en ce qu'elle comprend des charges et/ou matières de renforcement.

8. Colle thermofusible selon une ou plusieurs des revendications 1 à 7, caractérisée en ce qu'elle se présente en poudres, granulés, feuilles ou fibres.

9. L'emploi d'une celle thermofusible selon une ou plusieurs des revendications 1 à 8 pour fabriquer des éléments composites ou pièces jointes de substrats métalliques, céramiques et polymères.

10. Emploi selon la revendication 9 caractérisé en ce que les substrats sont des substrats d'acier, aluminium, cuivre, matières céramiques, verre et/ou matières plastiques.

11. Emploi selon la revendication 9 ou 10, caractérisé en ce que les pièces jointes sont des pièces d'acier ou acier/céramique.

## Revendications (Revendications pour l'(les) Etat(s) contractant(s) suivant(s): ES)

1. Procédé de préparation d'une colle thermofusible, procédé caractérisé en ce que l'on utilise une polyarylène-éther-cétone de formule
-[O-Ar(-L-Ar)ₓ-O-Ar-CO-(-Ar-M)_{y}-Ar-]- (I)
dans laquelle Ar désigne un groupe aromatique, indépendamment les uns des autres, un groupe phénylène, diphényle ou naphtylène, L et M désignent chacun -O- ou -CO- et x et y, indépendamment l'un de l'autre, le nombre 0, 1, 2, 3 ou 4, dont le rapport éther/cétone est compris entre 0,5 et 2, la fluidité à l'état fondu (MVI 400/10 mn) est de 2 à 250 et la polyarylène-éthercétone a la structure PEC, PEECC et PECECC.

2. Procédé selon la revendication 1, caractérisé en ce que la fluidité MVI est de 2 à 100.

3. Procédé selon la revendication 1 ou 2, caractérisé en ce que le rapport éther/cétone est compris entre 0,66 et 1.

4. Procédé selon une ou plusieurs des revendications 1 à 3, caractérisé en ce que la polyarylène-éther-cétone est une copolyéthercétone formée de deux motifs récurrents ou plus EC, EECC, ECECC et ECC.

5. Procédé selon une ou plusieurs des revendications 1 à 4, caractérisé en ce qu'il s'agit de mélanges de diverses polyarylène-éthercétones.

6. Procédé selon une ou plusieurs des revendications 1 à 5, caractérisé en ce jusqu'à 5 Mol% des groupes éthers sont remplacés par des groupes thioéthers.

7. Procédé selon une ou plusieurs des revendications 1 à 6, caractérisé en ce que la colle fusible comprend des charges et/ou matières de renforcement.

8. Procédé selon une ou plusieurs des revendications 1 à 7, caractérisé en ce que la colle se présente en poudres, granulés, feuilles ou fibres.

9. L'emploi d'une colle thermofusible selon une ou plusieurs des revendications 1 à 8 pour fabriquer des éléments composites ou pièces jointes de substrats métalliques, céramiques et polymères.

10. Emploi selon la revendication 9 caractérisé en ce que les substrats sont des substrats d'acier, aluminium, cuivre, matières céramiques, verre et/ou matières plastiques.

11. Emploi selon la revendication 9 ou 10, caractérisé en ce que les pièces jointes sont des pièces d'acier ou acier/céramique.
